(19) Europäisches Patentamt
European Patent Office
Office européen des brevets

(11) EP 4 502 001 A1

(12) **EUROPEAN PATENT APPLICATION**
published in accordance with Art. 153(4) EPC

(43) Date of publication:
**05.02.2025 Bulletin 2025/06**

(21) Application number: 23775299.3

(22) Date of filing: **22.03.2023**

(51) International Patent Classification (IPC):
**C08G 63/18** (2006.01)   **C08G 63/183** (2006.01)
**C08G 63/199** (2006.01)   **C08L 67/02** (2006.01)

(52) Cooperative Patent Classification (CPC):
**C08G 63/18; C08G 63/183; C08G 63/199;**
**C08L 67/02**

(86) International application number:
**PCT/KR2023/003792**

(87) International publication number:
**WO 2023/182803 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 KR 20220036015**

(71) Applicant: **SK Chemicals Co., Ltd.
Seongnam-si, Gyeonggi-do 13494 (KR)**

(72) Inventors:
• **KIM, Ha-Neul
  Seongnam-si, Gyeonggi-do 13494 (KR)**
• **KIM, Eui-Su
  Seongnam-si, Gyeonggi-do 13494 (KR)**
• **LEE, Boo-Youn
  Seongnam-si, Gyeonggi-do 13494 (KR)**

(74) Representative: **Berggren Oy
P.O. Box 16
Eteläinen Rautatiekatu 10A
00101 Helsinki (FI)**

(54) **POLYESTER COPOLYMER FOR HEAT SHRINK LABELS, COMPOSITION COMPRISING SAME, AND PRODUCT COMPRISING SAME**

(57)   In the present disclosure, there is provided a polyester copolymer excellent in shrinkage properties and removability. Specifically, the present disclosure is to provide a polyester copolymer having a tear strength in the range suitable for removal from a container and a shrinkage stress in the range not deforming the container.

EP 4 502 001 A1

**Description**

**[TECHNICAL FIELD]**

CROSS-REFERENCE TO RELATED APPLICATION(S)

This application claims the benefits of Korean Patent Application No. 10-2022-0036015 filed on March 23, 2022 with the Korean Intellectual Property Office, the disclosure of which is incorporated herein by reference in its entirety.

The present disclosure relates to a polyester copolymer that can be used for a heat shrinkable label and has excellent shrinkage properties and removability, and a composition including the same. It also relates to a product including the polyester copolymer.

**[BACKGROUND ART]**

In recent years, the use of plastic packaging containers has increased rapidly, and international environmental regulations for them have been strengthened. Accordingly, the industry is more interest in sustainable packaging. In addition, it is necessary to remove label papers from beverage containers according to the recycling method of waste. Therefore, there is a need to develop a resin for labels that can be easily removed from containers and has high shrinkage.

However, polystyrene and oriented polystyrene (OPS), which are widely used as materials for heat shrinkable film labels, have a problem of insufficient heat resistance and heat shrinkage properties. Accordingly, development of polyester-based resins for heat shrinkable films has been actively pursued by solving these problems.

However, since there is still no resin having both shrinkage properties such as shrinkage stress and shrinkage, and ease of label separation, there is a need for development thereof.

**[DETAILED DESCRIPTION OF THE INVENTION]**

**[Technical Problem]**

In the present disclosure, there is provided a polyester copolymer excellent in shrinkage properties and removability. Specifically, the present disclosure is to provide a polyester copolymer having a tear strength in the range suitable for removal from a container and a shrinkage stress in the range not deforming the container.

**[Technical Solution]**

In order to solve the above problems, there is provided the following polyester copolymer:

The polyester copolymer has a structure in which an acid moiety derived from a dicarboxylic acid or a derivative thereof and a diol moiety derived from a diol containing ethylene glycol are repeated,
wherein the polyester copolymer includes a residue of linear glycol monomers and a residue of cyclic monomers;
an A value of the following Equation 1 is 2.0 or more and 6.5 or less, and
a physical property factor value of the following Equation 2 is more than 0 and 42.5 or less.

A value = (residue content (mol%) of linear glycol monomers excluding ethylene glycol) * 20 / ((residue content (mol%) of cyclic monomers)*2 - 99)    [Equation 1]

$$\text{[Equation 2]}$$

$$\text{Physical property factor} = (\text{A value}) * 8.4 - 11.13$$

in the Equation 1, the content is based on 100 mol% of the total residue.

Hereinafter, it will be described in more detail.

In the present disclosure, the term 'residue' refers to a moiety or unit, which is derived from a specific compound contained in the product of a chemical reaction when the specific compound participates in the chemical reaction. Specifically, each of the 'residue' of the dicarboxylic acid component and the 'residue' of the diol component refers to a moiety derived from the dicarboxylic acid component or a moiety derived from the diol component in the polyester copolymer formed by an esterification reaction or a polycondensation reaction.

**Polyester copolymer**

The polyester copolymer according to one embodiment of the present disclosure is prepared by polymerizing a dicarboxylic acid or a derivative thereof and a diol, and has a structure in which an acid moiety derived from a dicarboxylic acid or a derivative thereof and a diol moiety derived from a diol containing ethylene glycol are repeated. In the present disclosure, the acid moiety and the diol moiety refer to residues remaining after hydrogen, hydroxyl groups, or alkoxy groups are removed from polymerization of a dicarboxylic acid or a derivative thereof and a diol. The dicarboxylic acid or a derivative thereof and the diol will be described in more detail below. For example, the dicarboxylic acid or a derivative thereof may be mainly terephthalic acid or a derivative thereof, and the diol includes ethylene glycol and may further include a derivative thereof.

Polyester copolymers generally have higher tear strength in the machine direction than in the vertical direction. However, when used as a label paper on a container, the low tear strength in the machine direction is advantageous for removal because it is easy to tear. In addition, if the shrinkage stress of the polyester copolymer is too high when used as a label paper on a container, deformation such as crushing of the container may occur. Accordingly, the present disclosure is intended to provide a polyester copolymer having a tear strength in the machine direction and a shrinkage stress in the range suitable for use as a label paper for a container, and the like.

The polyester copolymer may include the residue of linear glycol monomers and the residue of cyclic monomers.

In addition, the polyester copolymer may have a value of the following Equation 1 of 2.0 or more and 6.5 or less, and a physical property factor value of the following Equation 2 of more than 0 and 42.5 or less.

A value = (residue content (mol%) of linear glycol monomers excluding ethylene glycol) * 20 / ((residue content (mol%) of cyclic monomers)*2 - 99)      [Equation 1]

$$[\text{Equation 2}]$$

$$\text{Physical property factor} = (\text{A value}) * 8.4 - 11.13$$

in the Equation 1, the content is based on 100 mol% of the total residue.

100 mol% of the total residue means a sum of the residue content of cyclic monomers and the residue content of linear glycol monomers. That is, 100 mol% of the total residue in the present disclosure means a sum of the residue content derived from a dicarboxylic acid or a derivative thereof constituting the polyester copolymer and the residue content derived from a diol component. In addition, the dicarboxylic acid or a derivative thereof may be cyclic or linear, and the diol component may also be cyclic or linear.

Specifically, the value of Equation 1 may be 2.0 or more, 2.5 or more, 3.0 or more, 3.5 or more, or 4.0 or more and 6.5 or less, 6.0 or less, 5.5 or less, 5.0 or less, or 4.5 or less.

In addition, the physical property factor value of Equation 2 may be more than 0, more than 5.0, more than 10.0, more than 15.0, or more than 20.0 and 42.5 or less, 42.0 or less, 40.0 or less, 35.0 or less, 30.0 or less, or 25.0 or less.

The physical property factor value of Equation 2 represents a tear strength in the machine direction of the polyester copolymer. That is, the tear strength of the resin can be estimated only with the combination ratio of monomers without the step of stretching the resin and measuring the physical properties, and there is no prior art that expresses the tear strength as the combination ratio of monomers. In the actual industry, resins are manufactured in bulk, and it is practically impossible to readjust the composition ratio of input monomers after checking the physical properties during the manufacturing process. Therefore, it is very important to easily check the physical property factor to be achieved only with the composition ratio of monomers.

When the A value of Equation 1 is less than 2.0, the physical property factor value of Equation 2 and the tear strength in the machine direction (MD direction) have a large difference, and there may be a problem in that the physical property factor is useless. In addition, when the A value of Equation 1 exceeds 6.5, the tear strength exceeds 42.5 N/mm, making it difficult to tear and remove the label from the container when applied to the container.

The physical property factor value of Equation 2 represents the tear strength in the machine direction, and may be more than 0 and 42.5 or less in consideration of easy-to-tear property to be achieved in the present disclosure when the polyester copolymer is applied to a label for containers.

In Equation 1, the residue of cyclic monomers may be derived from a dicarboxylic acid or a derivative thereof, or a diol excluding ethylene glycol. The dicarboxylic acid or a derivative thereof and the diol excluding ethylene glycol are not limited as long as they are used in the polyester copolymer and are monomers having an aliphatic or aromatic ring structure in the molecular structure. For example, they may be at least one selected from the group consisting of 1,4-cyclohexanedimethanol, 1,4-cyclohexanedicarboxylic acid, terephthalic acid or a derivative thereof, reused 1,4-cyclohexanedimethanol, reused 1,4-cyclohexanedicarboxylic acid, and reused terephthalic acid or a derivative thereof. The terephthalic acid or a derivative thereof may be at least one selected from the group consisting of terephthalic acid, dimethyl terephthalic acid, hydroxyethyl terephthalic acid, reused terephthalic acid, reused dimethyl terephthalic acid, and reused hydroxyethyl terephthalic acid. In addition, the residue content of cyclic monomers may be 56.5 mol% or more and 67.5 mol% or less based on 100 mol% of the total residue. Specifically, the residue content of cyclic monomers may be 56.5 mol% or more, 60.0 mol% or more, 60.5 mol% or more, 61.0 mol% or more, 61.5 mol% or more, 62.0 mol% or more, 62.5 mol% or more, 63.0 mol% or more, 63.5 mol% or more, 64.0 mol% or more, 64.5 mol% or more, 65.0 mol% or more, 65.5 mol% or more, or 66.0 mol% or more and 67.5 mol% or less, 67.0 mol% or less, or 66.5 mol % or less based on 100 mol% of the total residue.

In Equation 1, the residue of linear glycol monomers may be derived from a diol. The diol is not limited as long as it is used in the polyester copolymer and the molecular structure is a linear structure. For example, it may be derived from at least one selected from the group consisting of ethylene glycol, diethylene glycol, neopentyl glycol, reused ethylene glycol, reused diethylene glycol, and reused neopentyl glycol.

In Equation 1, the residue content of linear glycol monomers excluding ethylene glycol is used as a variable. In this case, the residue content of linear glycol monomers excluding ethylene glycol in Equation 1 may be 12.5 mol% or less based on 100 mol% of the total residue. Specifically, the residue content of linear glycol monomers excluding ethylene glycol in Equation 1 may be 2.5 mol% or more, 3.0 mol% or more, 3.5 mol% or more, 4.0 mol% or more, 4.5 mol% or more, 5.0 mol% or more, 5.5 mol% or more, or 6.0 mol% or more and 12.5 mol% or less, 10.0 mol% or less, 8.0 mol% or less, 7.5 mol% or less, 7.0 mol% or less, or 6.5 mol% or less based on 100 mol% of the total residue.

Apart from Equation 1 above, the diol of the polyester copolymer of one embodiment of the present disclosure includes ethylene glycol. In the case of not including ethylene glycol, the tear strength in the machine direction exceeds 42.5 N/mm even though the A value and the physical property factor satisfy the above range. Therefore, when applied to the container as a label, it is difficult to tear the label, which is disadvantageous for separation, or the shrinkage stress is high, which may be different from the characteristics of the low shrinkage stress label to be achieved in the present disclosure. The residue of ethylene glycol monomers may be 27.5 mol% to 39.0 mol% based on 100 mol% of the total residue.

The polyester copolymer satisfying the Equations 1 and 2 may have a tear strength in the machine direction (MD direction) of 7.0 N/mm or more and 42.5 N/mm or less at 90 °C. Specifically, the tear strength in the machine direction (MD direction) at 90 °C may be 7.0 N/mm or more, 7.5 N/mm or more, 8.0 N/mm or more, 8.5 N/mm or more, 9.0 N/mm or more, 10.0 N/mm or more, 15.0 N/mm or more, 20.0 N/mm or more, or 25.0 N/mm or more, and 42.5 N/mm or less, 40.0 N/mm or less, 35.0 N/mm or less, or 30.0 N/mm or less.

When the tear strength in the machine direction is less than 7.0 N/mm, there may be a problem of not tearing in the desired direction when used as a label paper for containers, etc., and when it exceeds 42.5 N/mm, there may be a problem in removing when used as a label paper.

In addition, the polyester copolymer satisfying the Equations 1 and 2 may have a shrinkage stress of 12.0 MPa or less at 85 °C. Specifically, the polyester copolymer may have the shrinkage stress of 3.1 MPa or more and 12.0 MPa or less at 85 °C. Specifically, the shrinkage stress at 85 °C may be 3.1 MPa or more, 3.4 MPa or more, 4.0 MPa or more, 4.5 MPa or more, 5.0 MPa or more, 5.5 MPa or more, 6.0 MPa or more, or 6.5 MPa or more and 12.0 MPa or less, 11.0 MPa or less, 10.0 MPa or less, 9.0 MPa or less, 8.5 MPa or less, 8.0 MPa or less, or 7.0 MPa or less.

If the shrinkage stress exceeds 12.0 MPa, there may be a problem of deformation of the container when applied as a label paper for containers, and if it is too low, there may be a problem of not adhering to the container when used as a label paper for containers.

In addition, the polyester copolymer satisfying the Equations 1 and 2 may have a glass transition temperature of 69.0 °C or more and 74.8 °C or less. When the glass transition temperature is too low, there is a possibility of breakage in the heat treatment process during processing and manufacturing into a film, and when it is high, sufficient stretching required for label application may not be possible.

**Preparation of polyester copolymer**

The polyester copolymer may be prepared by including the steps of performing an esterification reaction or a transesterification reaction on a dicarboxylic acid or a derivative thereof and a diol; and performing a polycondensation reaction on a product obtained by the esterification or transesterification reaction.

In the esterification reaction or transesterification reaction, a catalyst may be used. The catalyst may be methylates of sodium and magnesium; acetates, borates, fatty acids, or carbonates of Zn, Cd, Mn, Co, Ca, Ba, and the like; metals such as Mg; or oxides of Pb, Zn, Sb, Ge, and the like.

The esterification or transesterification reaction may be carried out in a batch, semi-continuous or continuous manner. Each raw material may be added separately, but it may preferably be added in a slurry form in which the dicarboxylic acid or the derivative thereof is mixed in the diol.

A polycondensation catalyst, a stabilizer, a coloring agent, a crystallizing agent, an antioxidant, a branching agent, and the like may be added in the slurry before the esterification or transesterification reaction or in the product after completion of the reaction.

However, the input timing of the above-described additive is not limited thereto, and the above-described additive may be added at any time during the preparation of the polyester copolymer. As the polycondensation catalyst, at least one of conventional titanium, germanium, antimony, aluminum, tin-based compounds may be appropriately selected and used. Examples of the preferable titanium-based catalyst include tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, titanium dioxide/silicon dioxide copolymer, titanium dioxide/zirconium dioxide copolymer, and the like. In addition, examples of the preferable germanium-based catalyst include germanium dioxide and a copolymer thereof. As the stabilizer, phosphorus-based compounds such as phosphoric acid, trimethyl phosphate, and triethyl phosphate may be generally used, and an added content thereof may be 10 to 200 ppm with respect to a weight of the final polymer (polyester copolymer) based on a phosphorus atom. When the content of the stabilizer is less than 10 ppm, it may not be sufficiently stabilized and a color of the polymer may become yellow. When the content is more than 200 ppm, a polymer having a high degree of polymerization may not be obtained.

Further, examples of the coloring agent to be added for improving a color of the polymer may include conventional coloring agents such as cobalt acetate, cobalt propionate, and the like. An added content thereof may be 10 to 200 ppm with respect to a weight of the final polymer (polyester copolymer) based on a cobalt atom. If necessary, anthraquionone-based compounds, perinone-based compounds, azo-based compounds, methine-based compounds, and the like may be used as an organic coloring agent, and commercially available products include toners such as Polysynthren Blue RLS (manufactured by Clarient) and Solvaperm Red BB (manufactured by Clarient). An added content of the organic coloring agent may be 0 to 50 ppm with respect to a weight of the final polymer. When the coloring agent is used in the content out of the above-described range, a yellow color of the polyester copolymer may not be sufficiently covered or physical properties may be reduced.

Examples of the crystallizing agent may include a crystal nucleating agent, an ultraviolet absorber, a polyolefin-based resin, a polyamide resin, and the like. Examples of the antioxidant may include a hindered phenolic antioxidant, a phosphite-based antioxidant, a thioether-based antioxidant, and a mixture thereof.

Moreover, the esterification reaction may be carried out at a temperature of 200 to 300 °C or 230 to 280 °C, and under a pressure of 0 to 10.0 kgf/cm$^2$ (0 to 7355.6 mmHg), 0 to 5.0 kgf/cm$^2$ (0 to 3677.8 mmHg) or 0.1 to 3.0 kgf/cm$^2$ (73.6 to 2206.7 mmHg). In addition, the transesterification reaction may be carried out at a temperature of 150 to 270 °C or 180 to 260 °C, and under a pressure of 0 to 5.0 kgf/cm$^2$ (0 to 3677.8 mmHg) or 0.1 to 3.0 kgf/cm$^2$ (73.6 to 2206.7 mmHg). The pressures outside the parentheses refer to gauge pressures (expressed in kgf/cm$^2$) and the pressures inside parentheses refer to absolute pressures (expressed in mmHg).

When the reaction temperature and pressure are out of the above range, physical properties of the polyester copolymer may be lowered. The reaction time (average residence time) is usually 1 to 24 hours, or 2 to 8 hours, and may vary depending on the reaction temperature, pressure, and molar ratio of the diol to the dicarboxylic acid or a derivative thereof used.

The product obtained by the esterification or transesterification reaction may be subjected to a polycondensation reaction to prepare a polyester copolymer having a high degree of polymerization. Generally, the polycondensation reaction may be carried out at a temperature of 150 to 300 °C, 200 to 290 °C or 260 to 290 °C, and under a reduced pressure of 400 to 0.01 mmHg, 100 to 0.05 mmHg, or 10 to 0.1 mmHg. Herein, the pressures refer to absolute pressures. The reduced pressure of 400 to 0.01 mmHg is for removing by-products of the polycondensation reaction such as glycol and unreacted materials. Therefore, when the pressure is out of the above range, the removal of by-products and unreacted materials may be insufficient. In addition, when the temperature of the polycondensation reaction is out of the above range, physical properties of the polyester copolymer may be lowered. The polycondensation reaction may be carried out for the required time until the desired intrinsic viscosity is reached, for example, for an average residence time of 1 to 24 hours.

In order to reduce the content of the unreacted materials remaining in the polyester copolymer, the unreacted raw materials may be discharged out of the system by intentionally maintaining the vacuum reaction for a long period of time at the end of the esterification reaction or the transesterification reaction or at the beginning of the polycondensation reaction, that is, in a state in which the viscosity of the resin is not sufficiently high. When the viscosity of the resin is high, it is difficult for the raw materials remaining in the reactor to flow out of the system. For example, the unreacted materials remaining in the polyester copolymer may be removed effectively by leaving the reaction products obtained by the esterification or transesterification reaction before the polycondensation reaction for about 0.2 to 3 hours under a reduced pressure of about 400 to 1 mmHg or about 200 to 3 mmHg. Herein, a temperature of the product may be controlled to be equal to that of the esterification or transesterification reaction or that of the polycondensation reaction, or a temperature therebetween.

It is suitable that an intrinsic viscosity of the polymer obtained after the polycondensation reaction is 0.30 to 1.0 dl/g. When the intrinsic viscosity is less than 0.30 dl/g, a reaction rate in the solid-phase reaction may be significantly lowered. When the intrinsic viscosity exceeds 1.0 dl/g, a viscosity of a molten material may be increased during the melt polymerization, and thus a possibility of polymer discoloration may be increased by shear stress between a stirrer and the reactor, resulting in by-products such as acetaldehyde.

The polyester copolymer according to one embodiment may have a higher degree of polymerization by further performing a solid-phase reaction after the polycondensation reaction, if necessary.

Specifically, the polymer obtained by the polycondensation reaction is discharged out of the reactor to perform granulation. The granulation may be performed by a strand cutting method in which the polymer is extruded into a strand shape, solidified in a cooling liquid, and cut with a cutter, or an underwater cutting method in which a die hole is immersed in a cooling liquid, the polymer is directly extruded into the cooling liquid and cut with a cutter. In general, a temperature of the cooling liquid should be kept low in the strand cutting method to solidify the strand well, so that there is no problem in cutting. In the underwater cutting method, it is preferable to maintain the temperature of the cooling liquid in accordance with the polymer to make the shape of the polymer uniform. However, in the case of a crystalline polymer, the temperature of the cooling liquid may be intentionally kept high in order to induce crystallization during the discharge.

It is possible to remove raw materials soluble in water among unreacted raw materials by water-washing the granulated polymer. The smaller the particle size, the wider the surface area relative to a weight of particles. Accordingly, it is advantageous that a particle size is small. In order to achieve this purpose, the particles may be made to have an average weight of about 15 mg or less. For example, the granulated polymer may be water-washed by leaving it in water at a temperature equal to the glass transition temperature of the polymer or at a temperature of about 50 to 100 °C for 5 minutes to 10 hours.

The granulated polymer is subjected to a crystallization step to prevent fusion during the solid-phase reaction. The crystallization step may be performed under an atmosphere, inert gas, water vapor, or water vapor-containing inert gas or in solution, and may be performed at 110 to 210 °C or 120 to 210 °C. When the temperature is low, a rate at which crystals of the particles are formed may be excessively slow. When the temperature is high, a rate at which a surface of the particles is melted may be faster than a rate at which the crystals are formed, so that the particles may adhere to each other to cause fusion. Since the heat resistance of the particles is increased as the particles are crystallized, it is also possible to crystallize the particles by dividing the crystallization into several steps and raising the temperature stepwise.

The solid-phase reaction may be performed under an inert gas atmosphere such as nitrogen, carbon dioxide, argon, and the like or under a reduced pressure of 400 to 0.01 mmHg and at a temperature of 180 to 220 °C for an average residence time of 1 to 150 hours. By performing the solid-phase reaction, the molecular weight may be additionally increased, and the raw materials that do not react in the melting reaction but just remain, and a cyclic oligomer, acetaldehyde, and the like that are generated during the reaction may be removed.

The solid-phase reaction may be performed until the intrinsic viscosity of the crystallized polymer reaches 0.65 dl/g or more, 0.70 dl/g or more, 0.75 dl/g or more, or 0.80 dl/g or more, wherein the intrinsic viscosity is measured at 35 °C after dissolving the polymer at a concentration of 0.12 wt% in 150 °C orthochlorophenol.

In the extrusion blow molding (EBM) process, shear thinning characteristics are required, wherein the shear thinning characteristics maintain low viscosity in a high shear stress section inside a screw of a molding machine and exhibit high viscosity in a section forming a parison having low shear stress. Such shear thinning characteristics minimize heat generated by shear stress friction inside the screw and lower the temperature of the parison itself, thereby preventing the friction heat from being generated at a temperature higher than a molding temperature set in the molding machine.

In the case of multi-head extrusion blow molding with higher shear stress, several parisons are made from one screw, which results in higher shear stress due to higher RPM of the screw for more extrusion amount. Accordingly, better shear thinning characteristics are required.

**Dicarboxylic acid or its derivative**

The dicarboxylic acid component used in the present disclosure refers to a main monomer constituting the polyester copolymer together with the diol component. The term 'dicarboxylic acid or a derivative thereof' of the present disclosure means at least one compound selected from a dicarboxylic acid and derivatives of the dicarboxylic acid. In addition, the term 'derivative of the dicarboxylic acid' means an alkyl ester of dicarboxylic acid (C1 to C4 lower alkyl ester such as monomethyl ester, monoethyl ester, dimethyl ester, diethyl ester, dibutyl ester, or the like) or a dicarboxylic acid anhydride. Accordingly, for example, the terephthalic acid or a derivative thereof commonly includes a compound that reacts with a diol to form a terephthaloyl moiety, such as terephthalic acid; monoalkyl or dialkyl terephthalate; and terephthalic acid anhydride.

Specifically, the residue of the dicarboxylic acid component of the present disclosure may include one or more residues selected from the group consisting of terephthalic acid, dimethyl terephthalic acid, hydroxyethyl terephthalic acid, and a derivative thereof. Specifically, terephthalic acid or a derivative thereof may be at least one selected from the group consisting of terephthalic acid, dimethyl terephthalic acid, hydroxyethyl terephthalic acid, reused terephthalic acid, reused dimethyl terephthalic acid, and reused hydroxyethyl terephthalic acid.

In addition, the polyester copolymer may include an acid moiety derived from a comonomer excluding terephthalic acid or a derivative thereof. Specifically, the comonomer may be at least one selected from the group consisting of an aromatic dicarboxylic acid having 8 to 14 carbon atoms or a derivative thereof, and an aliphatic dicarboxylic acid having 4 to 12 carbon atoms or a derivative thereof. Examples of the aromatic dicarboxylic acid having 8 to 14 carbon atoms or a derivative thereof include isophthalic acid, naphthalenedicarboxylic acid such as 2,6-naphthalenedicarboxylic acid, diphenyl dicarboxylic acid, 4,4'-stilbenedicarboxylic acid, 2,5-furandicarboxylic acid, 2,5-thiophenedicarboxylic acid, and the like, but are not limited thereto. Examples of the aliphatic dicarboxylic acid having 4 to 12 carbon atoms or a derivative thereof include linear, branched or cyclic aliphatic dicarboxylic acid components including cyclohexanedicarboxylic acid such as 1,4-cyclohexanedicarboxylic acid and 1,3-cyclohexanedicarboxylic acid, phthalic acid, sebacic acid, succinic acid, isodecylsuccinic acid, maleic acid, fumaric acid, adipic acid, glutaric acid, and azelaic acid, but are not limited thereto. Specifically, the comonomer excluding terephthalic acid or a derivative thereof may be at least one selected from the group consisting of isophthalic acid, 2,6-naphthalenedicarboxylic acid, adipic acid, azelaic acid, succinic acid, and 1,4-cyclohexanedicarboxylic acid.

The dicarboxylic acid or a derivative thereof may include terephthalic acid or a derivative thereof in an amount more than 70 mol% based on 100 mol% of the total dicarboxylic acid or a derivative thereof, and at least one selected from the group consisting of an aromatic dicarboxylic acid having 8 to 14 carbon atoms or a derivative thereof and an aliphatic dicarboxylic acid having 4 to 12 carbon atoms or a derivative thereof in an amount of 30 mol% or less based on 100 mol% of the total dicarboxylic acid or a derivative thereof.

**Diol component**

The diol component used in the present disclosure refers to a main monomer constituting the polyester copolymer together with the above-described dicarboxylic acid component. In particular, the diol component may include diethylene glycol, neopentyl glycol, or cyclohexanedimethanol as a comonomer in addition to ethylene glycol. Further, reused ethylene glycol, reused diethylene glycol, reused neopentyl glycol, or reused cyclohexanedimethanol may be used as a monomer of the diol component.

The ethylene glycol is a component that contributes to improving transparency and impact strength of the polyester copolymer. Preferably, the residue of ethylene glycol may be included in an amount of 27.5 mol% to 39.0 mol% based on 100 mol% of the total residue.

The diethylene glycol is a component that contributes to improving the color of the polyester copolymer. Preferably, the amount of diethylene glycol may be 2.5 mol% to 6.5 mol% based on 100 mol% of the total residue.

The cyclohexanedimethanol (e.g., 1,2-cyclohexanedimethanol, 1,3-cyclohexanedimethanol or 1,4-cyclohexanedimethanol) is a component that contributes to improving transparency and impact strength of the polyester copolymer to be prepared. Preferably, the diol moiety derived from cyclohexanedimethanol is included in an amount of 6.5 to 16.5 mol% based on the total diol moiety of the polyester copolymer.

**Product including polyester copolymer**

According to one embodiment of the present disclosure, there may be provided a product including the polyester copolymer.

**Blend composition containing polyester copolymer**

According to one embodiment of the present disclosure, there may be provided a polyester copolymer blend composition containing 5 to 95 wt% of the polyester copolymer.

The blend composition may include a multilayer structure.

In addition, one embodiment of the present disclosure may provide a product including the polyester copolymer blend composition.

**[ADVANTAGEOUS EFFECTS]**

The polyester copolymer of one embodiment of the present disclosure has low shrinkage stress and excellent shrinkage properties, so that may not cause deformation of the container when applied to the container.

In addition, the polyester copolymer of one embodiment of the present disclosure may have a tear strength within an appropriate range, and thus may be easily removed from the container.

# EP 4 502 001 A1

## [DETAILED DESCRIPTION OF THE EMBODIMENTS]

Hereinafter, preferred examples are presented to help the understanding of the present invention. However, the following examples are provided only for easier understanding of the present invention, and the present invention is not limited thereto.

### Example 1

#### Step 1) Esterification reaction

TPA (terephthalic acid, 2300g), EG (ethylene glycol, 810g), CHDM (1,4-cyclohexanedimethanol, 650g), and DEG (diethylene glycol, 170g) were placed in a 10 L reactor to which a column, and a condenser capable of being cooled by water were connected, and $TiO_2$ (0.1 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

#### Step 2) Polycondensation reaction

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.70 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

### Example 2

#### Step 1) Esterification reaction

TPA (terephthalic acid, 2300g), EG (ethylene glycol, 1000g), CHDM (1,4-cyclohexanedimethanol, 700g), and DEG (diethylene glycol, 172g) were placed in a 10 L reactor to which a column, and a condenser capable of being cooled by water were connected, and $TiO_2$ (0.1 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

#### Step 2) Polycondensation reaction

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.68 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Example 3**

**Step 1) Esterification reaction**

TPA (terephthalic acid, 2300g), EG (ethylene glycol, 805g), CHDM (1,4-cyclohexanedimethanol, 654g), and DEG (diethylene glycol, 190g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Example 4**

**Step 1) Esterification reaction**

TPA (terephthalic acid, 2400g), EG (ethylene glycol, 880g), CHDM (1,4-cyclohexanedimethanol, 360g), CHDA (1,4-cyclohexanedicarboxylic acid, 300g) and DEG (diethylene glycol, 170g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

## Example 5

### Step 1) Esterification reaction

TPA (terephthalic acid, 2200g), EG (ethylene glycol, 760g), CHDM (1,4-cyclohexanedimethanol, 710g), and DEG (diethylene glycol, 200g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm². Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

### Step 2) Polycondensation reaction

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.72 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

## Example 6

### Step 1) Esterification reaction

TPA (terephthalic acid, 2220g), EG (ethylene glycol, 730g), CHDM (1,4-cyclohexanedimethanol, 750g), NPG (neopentyl glycol, 50g) and DEG (diethylene glycol, 150g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm². Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

### Step 2) Polycondensation reaction

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.72 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Example 7**

**Step 1) Esterification reaction**

TPA (terephthalic acid, 2260g), EG (ethylene glycol, 790g), CHDM (1,4-cyclohexanedimethanol, 670g) and DEG (diethylene glycol, 150g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.70 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Example 8**

**Step 1) Esterification reaction**

TPA (terephthalic acid, 2300g), EG (ethylene glycol, 870g), CHDM (1,4-cyclohexanedimethanol, 570g), and DEG (diethylene glycol, 140g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.72 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Example 9**

**Step 1) Esterification reaction**

TPA (terephthalic acid, 3000 g), EG (ethylene glycol, 1020 g), CHDM (1,4-cyclohexanedimethanol, 1000 g), and DEG (diethylene glycol, 230 g) were placed in a 10 L reactor to which a column, and a condenser capable of being cooled by water were connected, and $TiO_2$ (1 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.73 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Comparative Example 1**

**Step 1) Esterification reaction**

TPA (terephthalic acid, 2500g), EG (ethylene glycol, 1000g), CHDM (1,4-cyclohexanedimethanol, 200g), and DEG (diethylene glycol, 40g) were placed in a 10 L reactor to which a column, and a condenser capable of being cooled by water were connected, and $TiO_2$ (1 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.72 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Comparative Example 2**

**Step 1) Esterification reaction**

TPA (terephthalic acid, 2300g), EG (ethylene glycol, 860g), CHDM (1,4-cyclohexanedimethanol, 620g), and DEG (diethylene glycol, 80g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.72 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Comparative Example 3**

**Step 1) Esterification reaction**

TPA (terephthalic acid, 2000 g), EG (ethylene glycol, 520 g), CHDM (1,4-cyclohexanedimethanol, 1230 g), and DEG (diethylene glycol, 130 g) were placed in a 10 L reactor to which a column, and a condenser capable of being cooled by water were connected, and $TiO_2$ (1 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.74 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Comparative Example 4**

**Step 1) Esterification reaction**

TPA (terephthalic acid, 2000 g), EG (ethylene glycol, 830 g), CHDM (1,4-cyclohexanedimethanol, 300 g), and DEG (diethylene glycol, 150 g) were placed in a 10 L reactor to which a column, and a condenser capable of being cooled by water were connected, and $TiO_2$ (1 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Comparative Example 5**

Commercially available oriented polystyrene was used as Comparative Example 6.

**Comparative Example 6**

**Step 1) Esterification reaction**

TPA (terephthalic acid, 2400g), EG (ethylene glycol, 980g), CHDM (1,4-cyclohexanedimethanol, 290g), NPG (neopentyl glycol, 160g) and DEG (diethylene glycol, 150g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 kgf/cm$^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.70 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

**Comparative Example 7**

**Step 1) Esterification reaction**

TPA (terephthalic acid, 2500g), EG (ethylene glycol, 1010g), CHDM (1,4-cyclohexanedimethanol, 170g), NPG (neopentyl glycol, 260g) and DEG (diethylene glycol, 90g) were placed in a 10 L reactor to which a column, and a condenser capable of being cooled by water were connected, and $TiO_2$ (1.0 g) was added thereto as a catalyst.

Then, nitrogen was injected into the reactor to form a pressurized state in which the pressure of the reactor was higher than normal pressure by 1.0 $kgf/cm^2$. Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

**Step 2) Polycondensation reaction**

Then, the pressure of the 7 L reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.70 dl/g. When the intrinsic viscosity of the mixture in the reactor reached a desired level, the polycondensation mixture was discharged out of the reactor and stranded. This was solidified with a cooling liquid and granulated to have an average weight of about 12 to 14 mg, thereby preparing a polyester copolymer.

The physical properties of the polyester copolymers of Examples 1 to 10 and Comparative Examples 1 to 9 were measured by the following method and are shown in the table below.

**Residue composition (method for determining a molar ratio of residue of linear glycol monomers and residue of cyclic monomers)**

The residue composition (mol%) of glycol monomers and cyclic monomers in the polyester copolymer was confirmed through 1H-NMR spectrum obtained at 25 °C using a nuclear magnetic resonance apparatus (JEOL, 600 MHz FT-NMR) after dissolving the sample in a $CDCl_3$ solvent at a concentration of 3 mg/mL. In addition, the residue of TMA was confirmed by quantitative analysis of spectrum in which the content of benzene-1,2,4-triethylcarboxylate produced by the reaction of ethanol with TMA through ethanolysis was measured at 250 °C using gas chromatography (Agilent Technologies, 7890B). Further, it was confirmed as the content (mol%) based on the total number of moles of carboxylic acid and diol moieties.

**Intrinsic viscosity (IV)**

After dissolving the polyester copolymer in orthochlorophenol (OCP, o-chlorophenol) at a concentration of 0.12% at 150 °C, the intrinsic viscosity was measured in a constant temperature bath at 35 °C using an Ubbelohde viscometer. Specifically, the time taken (efflux time; $t_0$) for a solvent to pass between certain internal sections of the viscometer and the time taken (t) for a solution to pass the viscometer were measured. Subsequently, a specific viscosity was calculated by substituting $t_0$ and t into Equation 1, and the intrinsic viscosity was calculated by substituting the calculated specific viscosity into Equation 2.

[Equation 1]

$$\eta_{sp} = \frac{t - t_0}{t_0}$$

[Equation 2]

$$[\eta] = \frac{\sqrt{1 + 4A\eta_{sp}} - 1}{2AC}$$

**Glass transition temperature (Tg)**

The glass transition temperature of the prepared polyester copolymer was measured while heating the resin sample in the range of 25 °C to 150 °C at 10K/min.

**Shrinkage stress**

The shrinkage stress of the prepared polyester copolymer was obtained by initiating shrinkage in the vertical direction with hot air of 85 °C, fixing both ends of the film and measuring the final shrinkage stress in the vertical direction (TD direction) at 30 °C (unit: mPa).

**Tear strength in machine direction**

The tear strength of the prepared polyester copolymer was obtained by extruding the polyester copolymer prepared according to ASTM D1922 into a sheet having a thickness of 200 to 400 μm, stretching it by 500% at 600 mm/min in a direction perpendicular to the machine direction at a temperature of 88 °C, and dividing the measured value (k/gf) measured with a weight of 800 g using TGT-01 Tearing Tester from Leading Instruments by the thickness (mm) of the measured film, thereby excluding the influence factor by the film thickness.

[Table 1]

|  | Residue of ethylene glycol | Residue of diethylene glycol | Residue of neopentyl glycol | Residue of linear glycol monomers excluding ethylene glycol |
|---|---|---|---|---|
| unit | mol% | mol% | mol% | 몰 % |
| Ex. 1 | 29.5 | 4.0 | 0 | 4.0 |
| Ex. 2 | 30.5 | 4.3 | 0 | 4.3 |
| Ex. 3 | 30.0 | 6.0 | 0 | 6.0 |
| Ex. 4 | 32.8 | 4.8 | 0 | 4.8 |
| Ex. 5 | 28.0 | 6.5 | 0 | 6.5 |
| Ex. 6 | 27.5 | 5.0 | 1.0 | 6.0 |
| Ex. 7 | 30.5 | 4.8 | 0 | 4.8 |
| Ex. 8 | 33.5 | 4.3 | 0 | 4.3 |
| Ex. 9 | 38.7 | 4.6 | 0 | 4.6 |
| Comp. Ex. 1 | 45.9 | 0.65 | 0 | 0.65 |
| Comp. Ex. 2 | 16.3 | 3.8 | 0 | 3.8 |
| Comp. Ex. 3 | 36.0 | 9.0 | 0 | 9.0 |
| Comp. Ex. 4 | 39.0 | 4.5 | 0 | 4.5 |
| Comp. Ex. 5 | 0 | 0 | 0 | 0 |
| Comp. Ex. 6 | 36.5 | 4.5 | 3.0 | 7.5 |
| Comp. Ex. 7 | 37.5 | 2.5 | 7.0 | 9.5 |

[Table 2]

| | Residue of terephthalic acid | Residue of 1,4-cyclohexanedimethanol | Residue of 1,4-cyclohexanedicarboxylic acid | cyclic monomers |
|---|---|---|---|---|
| unit | mol% | mol% | mol% | 몰 % |
| Ex. 1 | 50.0 | 16.5 | 0 | 66.5 |
| Ex. 2 | 50.0 | 15.3 | 0 | 65.3 |
| Ex. 3 | 50.0 | 14.0 | 0 | 64.0 |
| Ex. 4 | 50.0 | 7.5 | 5.0 | 62.5 |
| Ex. 5 | 50.0 | 15.5 | 0 | 65.5 |
| Ex. 6 | 50.0 | 16.5 | 0 | 66.5 |
| Ex. 7 | 50.0 | 14.8 | 0 | 64.8 |
| Ex. 8 | 50.0 | 12.3 | 0 | 62.3 |
| Ex. 9 | 50.0 | 6.8 | 0 | 56.8 |
| Comp. Ex. 1 | 50.0 | 3.5 | 0 | 53.5 |
| Comp. Ex. 2 | 50.0 | 30.0 | 0 | 80.0 |
| Comp. Ex. 3 | 50.0 | 5.0 | 0 | 55.0 |
| Comp. Ex. 4 | 50.0 | 6.5 | 0 | 56.5 |
| Comp. Ex. 5 | 0 | 0 | 0 | 0 |
| Comp. Ex. 6 | 50.0 | 6.0 | 0 | 56.0 |
| Comp. Ex. 7 | 50.0 | 3.0 | 0 | 53.0 |

[Table 3]

| | A value* | Physical property factor ** | Tear strength in MD @ 90°C | Shrinkage stress @ 85°C | Glass transition temperature |
|---|---|---|---|---|---|
| unit | - | - | N/mm | MPa | °C |
| Ex. 1 | 2.4 | 8.6 | 8.5 | 6.0 | 74.8 |
| Ex. 2 | 2.7 | 11.7 | 15.4 | 5.8 | 71.0 |
| Ex. 3 | 4.1 | 23.6 | 27.0 | 3.4 | 70.0 |
| Ex. 4 | 3.7 | 19.9 | 19.5 | 5.6 | 72.1 |
| Ex. 5 | 4.1 | 23.0 | 23.7 | 4.7 | 69.0 |
| Ex. 6 | 3.5 | 18.5 | 19.0 | 4.5 | 71.0 |
| Ex. 7 | 3.1 | 15.2 | 20.0 | 7.0 | 70.0 |
| Ex. 8 | 3.3 | 17.1 | 15.0 | 6.5 | 69.5 |
| Ex. 9 | 6.3 | 41.8 | 42.0 | 11.0 | 70.0 |
| Comp. Ex. 1 | 1.6 | 2.5 | 7.0 | 2.0 | 78.0 |
| Comp. Ex. 2 | 1.2 | -0.7 | 4.2 | 8.0 | 77.5 |
| Comp. Ex. 3 | 16.4 | 126.3 | 100.0 | 3.0 | 70.0 |
| Comp. Ex. 4 | 6.4 | 42.9 | 53 | 12.5 | 73.0 |
| Comp. Ex. 5 | 0 | -11.1 | 6.2 | 3.5 | 72.0 |
| Comp. Ex. 6 | 11.5 | 85.8 | 90.0 | 3.0 | 68.0 |

(continued)

|  | A value* | Physical property factor ** | Tear strength in MD @ 90°C | Shrinkage stress @ 85°C | Glass transition temperature |
|---|---|---|---|---|---|
| Comp. Ex. 7 | 27.1 | 216.9 | 240.0 | 3.0 | 68.0 |
| * A value = (residue of linear glycol monomers excluding ethylene glycol) * 20 / ((residue of cyclic monomers)*2 - 99) <br> ** <br> $$\text{Physical property factor} = (\text{A value}) * 8.4 - 11.13$$ | | | | | |

Referring to Comparative Examples 2 to 3 and 5 to 7 in Table 3, when the A value did not satisfy the range of 2.0 or more and 6.5 or less, there was a difference between the physical property factor value and the tear strength in the MD direction, or the tear strength in the MD direction was too large, exceeding 42.5 N/mm.

In the case of Comparative Example 1, the A value range was not satisfied, but the physical property factor value range was satisfied. However, the measured tear strength value was different from the physical property factor, and the measured shrinkage stress was too low as 2 MPa.

In the case of Comparative Example 4 in which the physical property factor value slightly exceeded 42.5, the actually measured tear strength exceeded 42.5 N/mm, and the shrinkage stress also exceeded 12 MPa.

Accordingly, it was confirmed that the tear strength could be estimated without the step of stretching the resin and measuring the physical properties when the polyester copolymer satisfies the A value of 2.0 to 6.5 and the physical property factor of more than 0 and 42.5 or less. In addition, it was confirmed that the polyester copolymer satisfying the A value range and the physical property factor had appropriate tear strength and shrinkage stress for use as a film in a packaging container.

**Claims**

1. A polyester copolymer having a structure in which an acid moiety derived from a dicarboxylic acid or a derivative thereof and a diol moiety derived from a diol containing ethylene glycol are repeated,

   wherein the polyester copolymer comprises a residue of linear glycol monomers and a residue of cyclic monomers,
   an A value of the following Equation 1 is 2.0 or more and 6.5 or less, and
   a physical property factor value of the following Equation 2 is more than 0 and 42.5 or less:

   A value = (residue content (mol%) of linear glycol monomers excluding ethylene glycol) * 20 / ((residue content (mol%) of cyclic monomers)*2 - 99)        [Equation 1]

   [Equation 2]

   $$\text{Physical property factor} = (\text{A value}) * 8.4 - 11.13$$

   in the Equation 1, the content is based on 100 mol% of the total residue.

2. The polyester copolymer of Claim 1,
   wherein the residue of cyclic monomers is derived from at least one selected from the group consisting of 1,4-cyclohexanedimethanol, 1,4-cyclohexanedicarboxylic acid, terephthalic acid or a derivative thereof, reused 1,4-cyclohexanedimethanol, reused 1,4-cyclohexanedicarboxylic acid, and reused terephthalic acid or a derivative thereof.

3. The polyester copolymer of Claim 1,
   wherein the residue of linear glycol monomers may be derived from at least one selected from the group consisting of ethylene glycol, diethylene glycol, neopentyl glycol, reused ethylene glycol, reused diethylene glycol, and reused neopentyl glycol.

4. The polyester copolymer of Claim 1,
wherein the residue content of linear glycol monomers excluding ethylene glycol in Equation 1 is 12.5 mol% or less based on 100 mol% of the total residue.

5. The polyester copolymer of Claim 1,
wherein the residue content of cyclic monomers in Equation 1 is 56.5 mol% or more and 67.5 mol% or less based on 100 mol% of the total residue.

6. The polyester copolymer of Claim 1,
wherein the polyester copolymer has a tear strength in the machine direction of 7.0 N/mm or more and 42.5 N/mm or less at 90 °C.

7. The polyester copolymer of Claim 1,
wherein the polyester copolymer has a shrinkage stress of 12.0 MPa or less at 85 °C.

8. The polyester copolymer of Claim 7,
wherein the polyester copolymer has a shrinkage stress of 8.5 MPa or less at 85 °C.

9. The polyester copolymer of Claim 1,
wherein the value of Equation 1 is 3.0 or more and 6.5 or less.

10. The polyester copolymer of Claim 1,
wherein the value of Equation 2 is more than 5.0 and 42.5 or less.

11. The polyester copolymer of Claim 2,
wherein the terephthalic acid or a derivative thereof is at least one selected from the group consisting of terephthalic acid, dimethyl terephthalic acid, hydroxyethyl terephthalic acid, reused terephthalic acid, reused dimethyl terephthalic acid, and reused hydroxyethyl terephthalic acid.

12. A product comprising the polyester copolymer of any one of Claims 1 to 11.

13. A polyester copolymer blend composition containing 5 to 95 wt% of the polyester copolymer of any one of Claims 1 to 11.

14. A product comprising the polyester copolymer blend composition of Claim 13.

## INTERNATIONAL SEARCH REPORT

| | International application No. |
|---|---|
| | **PCT/KR2023/003792** |

**A.  CLASSIFICATION OF SUBJECT MATTER**

**C08G 63/18**(2006.01)i; **C08G 63/183**(2006.01)i; **C08G 63/199**(2006.01)i; **C08L 67/02**(2006.01)i

According to International Patent Classification (IPC) or to both national classification and IPC

**B.  FIELDS SEARCHED**

Minimum documentation searched (classification system followed by classification symbols)

C08G 63/18(2006.01); B32B 27/36(2006.01); B32B 7/02(2006.01); C08G 63/00(2006.01); C08G 63/183(2006.01); C08G 67/00(2006.01); C08J 7/043(2020.01); C08L 67/02(2006.01); C09J 7/25(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디카르복실산(dicarboxylic acid), 테레프탈산(terephthalic acid, TPA), 에틸렌 글리콜(ethylene glycol, EG), 디에틸렌 글리콜(diethylene glycol, DEG), 폴리에스테르 공중합체(polyester copolymer), 라벨(label)

**C.  DOCUMENTS CONSIDERED TO BE RELEVANT**

| Category* | Citation of document, with indication, where appropriate, of the relevant passages | Relevant to claim No. |
|---|---|---|
| X<br><br>Y | US 2021-0214583 A1 (C.I. TAKIRON CORPORATION) 15 July 2021 (2021-07-15)<br>See abstract; paragraphs [0001] and [0108]; example 1; and tables 1 and 2. | 1-12<br><br>13,14 |
| Y | WO 2009-111058 A1 (EASTMAN CHEMICAL COMPANY) 11 September 2009 (2009-09-11)<br>See abstract; and claim 1. | 13,14 |
| A | US 2013-0274434 A1 (KIM, S. D. et al.) 17 October 2013 (2013-10-17)<br>See abstract; example 3; and table 1. | 1-12 |
| A | JP 2000-318105 A (FUJI SEAL INC.) 21 November 2000 (2000-11-21)<br>See entire document. | 1-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 June 2023** | **26 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/003792**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0072065 A (EASTMAN CHEMICAL COMPANY) 16 June 2021 (2021-06-16)<br>See entire document. | 1-12 |

Form PCT/ISA/210 (second sheet) (July 2022)

INTERNATIONAL SEARCH REPORT
Information on patent family members

International application No.

**PCT/KR2023/003792**

| Patent document cited in search report | | | Publication date (day/month/year) | Patent family member(s) | | | Publication date (day/month/year) |
|---|---|---|---|---|---|---|---|
| US | 2021-0214583 | A1 | 15 July 2021 | JP | 2019-206639 | A | 05 December 2019 |
| | | | | JP | 7101542 | B2 | 15 July 2022 |
| | | | | WO | 2019-230843 | A1 | 05 December 2019 |
| WO | 2009-111058 | A1 | 11 September 2009 | CN | 101959927 | A | 26 January 2011 |
| | | | | CN | 101959927 | B | 12 December 2012 |
| | | | | EP | 2260068 | A1 | 15 December 2010 |
| | | | | JP | 2011-513550 | A | 28 April 2011 |
| | | | | US | 2009-0227735 | A1 | 10 September 2009 |
| US | 2013-0274434 | A1 | 17 October 2013 | CN | 103154101 | A | 12 June 2013 |
| | | | | CN | 103154101 | B | 27 April 2016 |
| | | | | EP | 2631261 | A2 | 28 August 2013 |
| | | | | EP | 2631261 | B1 | 10 August 2022 |
| | | | | JP | 2013-542289 | A | 21 November 2013 |
| | | | | JP | 5841157 | B2 | 13 January 2016 |
| | | | | KR | 10-1220226 | B1 | 09 January 2013 |
| | | | | KR | 10-2012-0041000 | A | 30 April 2012 |
| | | | | TW | 201217429 | A | 01 May 2012 |
| | | | | TW | I438221 | B | 21 May 2014 |
| | | | | US | 9574047 | B2 | 21 February 2017 |
| | | | | WO | 2012-053821 | A2 | 26 April 2012 |
| | | | | WO | 2012-053821 | A3 | 21 June 2012 |
| JP | 2000-318105 | A | 21 November 2000 | | None | | |
| KR | 10-2021-0072065 | A | 16 June 2021 | CN | 112789156 | A | 11 May 2021 |
| | | | | EP | 3863832 | A1 | 18 August 2021 |
| | | | | JP | 2022-508653 | A | 19 January 2022 |
| | | | | MX | 2021003703 | A | 04 June 2021 |
| | | | | US | 2021-0395446 | A1 | 23 December 2021 |
| | | | | WO | 2020-076749 | A1 | 16 April 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220036015